Europäisches Patentamt

European Patent Office

Office européen des brevets

(19)

(11) Numéro de publication : **0 078 740**
**B1**

(12) **FASCICULE DE BREVET EUROPÉEN**

(45) Date de publication du fascicule du brevet :
20.08.86

(51) Int. Cl.⁴ : **H 02 K   7/06**, H 02 K 41/06

(21) Numéro de dépôt : **82401983.0**

(22) Date de dépôt : **26.10.82**

(54) Vérin électromagnétique débrayable.

(30) Priorité : **29.10.81 FR 8120503**

(43) Date de publication de la demande :
**11.05.83 Bulletin 83/19**

(45) Mention de la délivrance du brevet :
**20.08.86 Bulletin 86/34**

(84) Etats contractants désignés :
**DE FR GB IT NL SE**

(56) Documents cités :
**FR-A- 1 396 807**
**FR-A- 1 581 334**
**GB-A-   785 188**

(73) Titulaire : **CROUZET**
**128, Avenue de la République**
**F-75011 Paris (FR)**

(72) Inventeur : **Rubet, Roland**
**Les Grands Bois Montelier**
**F-26210 Chabeuil (Drôme) (FR)**
Inventeur : **Vergues, Jacques**
**10, rue Couperin**
**F-26000 Valence (Drôme) (FR)**

(74) Mandataire : **Bloch, Robert et al**
**39 avenue de Friedland**
**F-75008 Paris (FR)**

EP 0 078 740 B1

## Description

L'invention concerne un vérin électromagnétique débrayable pour la commande d'un organe mobile de réglage automatique de machine.

Parmi les nombreuses applications possibles, celle dont le problème technique est à l'origine de l'invention appartient au domaine des moteurs thermiques, notamment pour l'automobile où il a été constaté que la régulation de la température de l'air d'admission avait une incidence directe et importante sur l'économie de carburant.

Selon la pratique habituelle, cette régulation est obtenue grâce au mélange dosé d'une quantité variable d'air frais ambiant aspiré à l'extérieur de l'enceinte de fonctionnement du moteur et d'air réchauffé, par exemple au contact de la tubulure d'échappement.

Le dosage optimal du mélange d'air admis dans le moteur est généralement obtenu par le déplacement d'un volet mobile situé en amont du filtre d'air et à la jonction de deux conduits d'aspiration. Le volet est habituellement actionné par la déformation d'une membrane soumise à la dépression de la tubulure d'admission par l'intermédiaire d'une soupape dont le débit de fuite est réglé par un dispositif à bilame sensible aux variations de température de l'air admis.

L'inconvénient majeur de cette technique, au demeurant simple et économique à réaliser, est l'imprécision du dosage qu'elle procure, du fait de l'élasticité inhérente du dispositif, due à l'emploi d'une membrane. En effet, sous l'effet des pulsations rythmées du moteur, la masse associée des éléments mobiles du dispositif est constamment sujette à des oscillations plus ou moins résonnantes préjudiciables à la précision recherchée du dosage.

La présente invention a essentiellement pour but de supprimer cet inconvénient en proposant un dispositif de commande simple, fiable et de réalisation économique dont l'action positive et quasiment dépourvue d'élasticité propre empêche la propension aux vibrations parasites et par conséquent procure une précision de réglage rigoureuse dans une plage prédéterminée.

Le dispositif de l'invention vise en outre à opérer le débrayage instantané de l'action positive de commande par la seule interruption, volontaire ou accidentelle, de son alimentation électrique.

A cet effet, la présente invention concerne un vérin électromagnétique débrayable pour la commande d'un organe mobile de réglage automatique de machine, caractérisé par le fait qu'il comprend une vis et un écrou fixe ferromagnétiques de diamètres différents, et un dispositif inducteur électromagnétique multipolaire dont une portion de chaque circuit statorique élémentaire est constitué par un segment angulaire dudit écrou et convertissant une force électromotrice en une force magnétomotrice déplaçable dont le flux engendré résultant $\phi$ est propre à provoquer l'adhésion mutuelle ainsi qu'un mouvement relatif cycloïdal de la vis et de l'écrou, la vis roulant sur la paroi filetée de l'alésage de l'écrou en déterminant une force motrice axiale sous l'effet conjugué de l'adhérence magnétique tournante et de la contrainte mécanique imposée par la coopération tangentielle des filetages de la vis et de l'écrou.

Le document FR-A-1 581 334, porté à la connaissance de la demanderesse, a pour objet une moto-transmission, dont le fonctionnement procède d'un principe analogue à celui de l'invention. Mais, et d'abord, il s'agit d'un dispositif électromagnétique non débrayable associé à une transmission planétaire pour l'entraînement d'éléments de contact roulant réalisés au moyen de dentures d'engrenage, qui distingue déjà ce dispositif de l'invention ; certes l'entraînement de ce document antérieur se fait par des moyens ferromagnétiques de transmission de force motrice, lesdits moyens ferromagnétiques comprenant un élément fixe et un élément mobile, ledit élément fixe faisant lui-même partie intégrante des moyens de conversion d'une force électromotrice en une force magnétomotrice déplaçable dont le flux engendré résultant est propre à provoquer l'adhésion mutuelle ainsi que ledit mouvement relatif cycloïdal desdits moyens ferromagnétiques. Ensuite, le vérin de l'invention se distingue aussi de cette moto-transmission de l'art antérieur par son écrou et sa vis de transmission.

L'invention sera mieux comprise à la lecture de la description qui suit de l'exemple de réalisation préférée de l'invention, en référence aux dessins annexés, sur lesquels :

La figure 1 est une vue d'ensemble en coupe axiale d'un dispositif régulateur de l'air réchauffé admis dans un moteur d'automobile, ce dispositif étant muni du vérin conforme à l'invention ;

la figure 2 représente, vu de dessus, le dispositif statorique du vérin de la figure 1 ;

la figure 3 est une vue partielle et à plus grande échelle que sur la figure 2 du dispositif transmetteur ferromagnétique désaccouplable ;

la figure 4 est une vue latérale en coupe de l'écrou du transmetteur de la figure 3, et

la figure 5 est une vue latérale en coupe partielle de la vis du transmetteur de la figure 3.

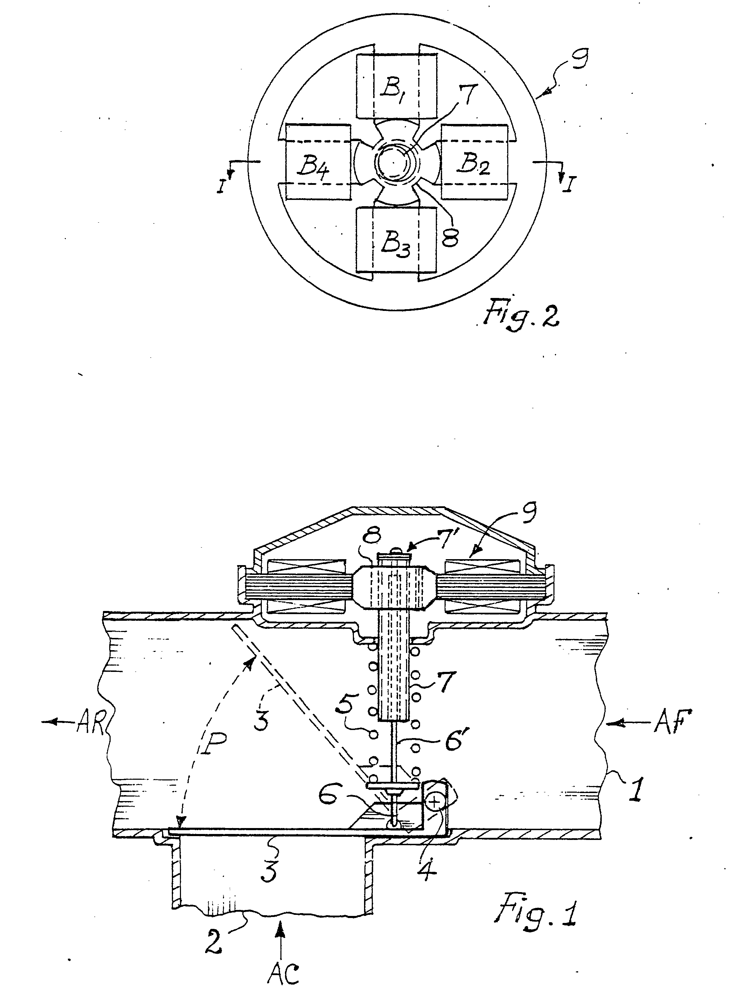

Le dispositif régulateur représenté figure 1 comprend, de manière connue, deux conduits 1 et 2, à la jonction desquels un volet mobile 3 permet d'agir sur le dosage relatif d'un certain débit d'air froid (AF) provenant de l'extérieur par le conduit 1, et d'air chaud (AC) provenant d'une source artificielle intérieure par le conduit 2, afin d'obtenir un mélange régulé d'air tiède (AR) approprié au fonctionnement économique optimal d'un moteur thermique.

Le volet 3, qui est articulé sur un axe de pivotement 4 solidaire des conduits 1 et 2, peut occuper toutes les positions intermédiaires P comprises entre celles correspondant à l'obturation complète, soit du conduit d'air chaud 2 (AC), soit du conduit d'air froid (AF). Toutefois, il est nécessaire de souligner que dans l'application considérée la position de repos du volet 3 normalement imposée est celle représentée en traits pleins sur la figure 1, qui correspond à l'obturation du conduit d'air chaud 2 (AC) dont l'aspiration anormalement prolongée à température excessive serait préjudiciable au fonctionnement et à la longévité du moteur.

Cette exigence est la raison primordiale pour laquelle la position de repos normal du volet 3 est imposée par le ressort précomprimé 5 dont l'effort de détente, en appui sur la paroi interne du conduit 1, s'exerce de manière permanente sur le volet 3 par l'intermédiaire d'une tige d'articulation rigide 6.

L'actionnement du volet 3 dans toutes les positions comprises entre la position de repos normal précédemment définie et la position de travail maximal représentée en traits interrompus et correspondant à l'aspiration minimale d'air froid (AF) est effectué par l'organe transmetteur débrayable du vérin selon l'invention, dont la force motrice s'exerce contre l'action permanente de rappel du ressort 5.

L'organe mobile de transmission du vérin est une vis tubulaire 7 pénétrant dans le conduit 1 et coaxialement solidaire du ressort 5 grâce à une tige de traction épaulée et flexible 6' prolongeant la tige d'articulation rigide 6 jusqu'à un dispositif d'amarrage 7' situé à l'extrémité de l'alésage de la vis 7 sur la face supérieure de laquelle il vient prendre un appui permettant leur liberté de rotation relative.

Le détail du dispositif d'amarrage tournant 7' est représenté figure 5 à titre d'exemple. Il comporte un simple empilement de rondelles superposées et en appui glissant les unes par rapport aux autres, sur la dernière desquelles la tige 6' est fixée par exemple par soudure.

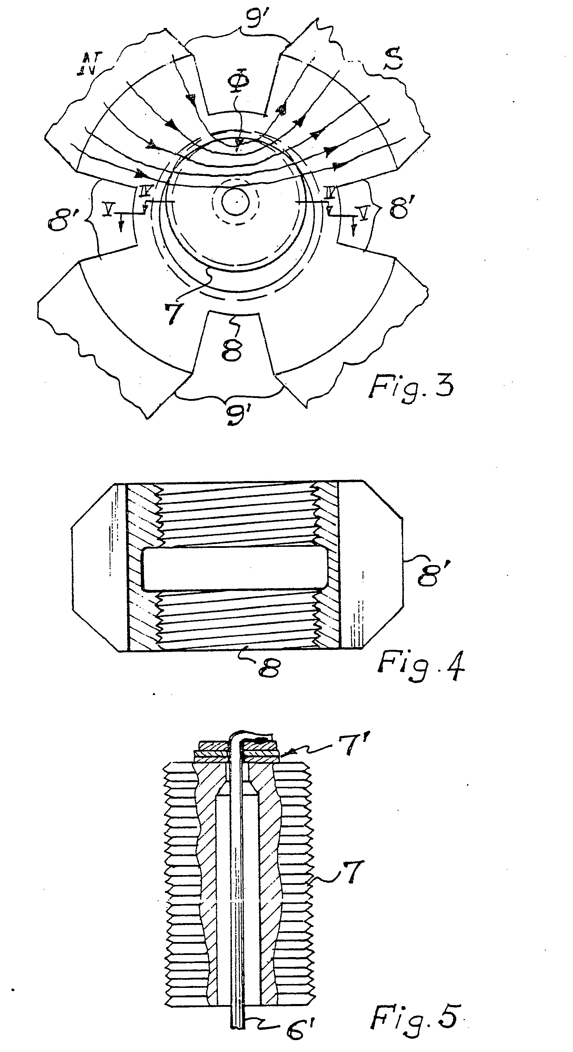

La vis 7 (figure 5) qui est destinée à coopérer avec l'écrou 8 (figure 4) présente la particularité que son diamètre maximal externe est inférieur au diamètre minimal interne de l'écrou (figure 3).

Cette position dimensionnelle permet, en l'absence d'engagement tangentiel de leur filetage respectif, d'assurer la liberté axiale relative de la vis 7 et de l'écrou 8 et par conséquent d'obtenir la faculté de débrayage mécanique du vérin.

L'écrou 8 qui, tout comme la vis 7, est réalisé en un matériau ferromagnétique non rémanent, est encastré par forcement de ses épanouissements polaires périphériques 8' au centre d'un dispositif statorique multipolaire comportant dans l'exemple de réalisation représenté figure 2, un ensemble de quatre bobines $B_1$, $B_2$, $B_3$, $B_4$ correspondant aux quatre pôles 9' du stator et aux quatre pôles 8' de l'écrou. L'excitation électrique simultanée de deux bobines voisines provoque l'adhérence tangentielle de la vis 7 dans la zone interpolaire étranglée de l'écrou 8 présentant la plus grande réluctance et par conséquent un flux d'induction $\Phi$ intense dans la partie de la vis 7 la plus proche de la paire de pôles statoriques (NS) excités (figure 3).

Lorsque l'excitation simultanée de deux bobines voisines est effectuée successivement dans l'ordre suivant : $(B_1 — B_2)$, $(B_2 — B_3)$, $(B_3 — B_4)$. $(B_4 — B_1)$, etc., il en découle une translation angulaire du flux $\Phi$ dans l'alésage de l'écrou statorique 8 telle que la vis rotorique 7 est mue pas à pas en roulant sur la paroi interne de l'écrou 8.

Ce mouvement de nature cycloïdale amène les filetages respectifs de la vis 7 et de l'écrou 8 à coopérer mécaniquement de manière telle qu'il en résulte le mouvement axial de la vis 7 et par conséquent la transmission mécanique dans l'axe de ladite vis 7 de la force magnétomotrice tournante d'origine statorique. Il faut toutefois préciser que pour obtenir le mouvement axial relatif des éléments d'un système vis-écrou animé d'un mouvement cycloïdal, il est nécessaire que le filetage hélicoïdal d'un des éléments coopère tangentiellement avec le filetage non hélicoïdal de l'autre élément. Autrement dit, le filetage non hélicoïdal doit se présenter sous forme d'une pluralité de filets parallèles de pas nul, assimilable à une crémaillère à denture circulaire.

Les figures 3, 4 et 5 illustrent sur ce point la forme d'exécution particulière de l'invention où l'écrou statorique 8 comporte un filetage hélicoïdal destiné à coopérer tangentiellement avec la vis rotorique 7 dont le filetage — de profil complémentaire — se compose d'une série de filets parallèles d'inclinaison axiale nulle. Dans ces conditions un cycle d'excitation des bobines provoque le déplacement de la vis 7 de la valeur d'un filet.

Le système peut toutefois fonctionner avec deux filetages hélicoïdaux à condition que le roulement de la vis à l'intérieur de l'écrou provoque, du fait de la différence de diamètre, une rotation de la vis par rapport à l'écrou.

**Revendication**

Vérin électromagnétique débrayable pour la commande d'un organe mobile de réglage automatique de machine, caractérisé par le fait qu'il comprend une vis (7) et un écrou fixe (8) ferromagnétiques de diamètres différents, et un dispositif inducteur électromagnétique multipolaire (9) dont une portion de chaque circuit statorique élémentaire est constitué par un segment angulaire dudit écrou (8) et convertissant une force électromotrice en une force magnétomotrice déplaçable dont le flux engendré résultant ($\Phi$) est propre à provoquer l'adhésion mutuelle ainsi qu'un mouvement relatif cycloïdal de la vis et de l'écrou, la vis roulant sur la paroi filetée de l'alésage de l'écrou en déterminant une force motrice axiale sous l'effet conjugué de l'adhérence magnétique tournante et de la contrainte mécanique imposée par la coopération tangentielle des filetages de la vis et de l'écrou.

**Claim**

Disconnectable electromagnetic jack for controlling a mobile member for automatically adjusting a machine, characterized in that it comprises a ferromagnetic screw (7) and a fixed ferromagnetic nut (8) having different diameters, and a multipolar electromagnetic inductor (9) of which a portion of each elementary stator circuit is constituted by an angular segment of said nut (8) and converting an electromotive force into a displaceable magnetomotive force with a resultant generated flux (Φ) which is adapted to provoke the mutual adhesion as well as a relative cycloidal movement of the screw and nut, whereby the screw rolls on the threaded wall of the bore of the nut, thereby determining an axial driving force under the combined effect of the rotating magnetic adherence and of the mechanical stress imposed by the tangential cooperation of the threads of the screw and nut.

**Patentanspruch**

Elektromagnetischer Ausschaltkraftzylinder für

die Steuerung eines beweglichen Stellgliedes zur automatischen Regelung von Maschinen, dadurch gekennzeichnet, dass er eine ferromagnetische Schraube (7) und eine ortsfeste ferromagnetische Mutter (8) mit unterschiedlichen Durchmessern und eine mehrpolige elektromagnetische Induktionseinrichtung (9) umfasst, bei welcher ein Teil jedes Basis-Statorkreises von einem Winkelsegment der Mutter (8) gebildet ist und eine elektromotorische in eine ortsveränderliche magnetomotorische Kraft umgewandelt wird, wobei der erzeugte resultierende Fluss (Φ) die gegenseitige Anziehung ebenso wie eine zykloidale Relativbewegung von Schraube und Mutter bewirkt, wobei sich die Schraube in der mit einem Gewinde versehenen Wand der Bohrung der Mutter verschraubt wobei eine achsial wirkende Antriebskraft bestimmt ist, durch das Zusammenwirken von der drehenden magnetischen Anziehungskraft und dem durch das tangentiale Zusammenwirken der Gewinde von Schraube und Mutter bedingten mechanischen Zwang.

Fig.2

Fig.1

0 078 740

Fig. 3

Fig. 4

Fig. 5

2